Europäisches Patentamt

European Patent Office

Office européen des brevets

(19)

(11) Publication number : **0 666 675 A2**

(12) **EUROPEAN PATENT APPLICATION**

(21) Application number : **95300694.7**

(22) Date of filing : **03.02.95**

(51) Int. Cl.⁶ : **H04M 1/72**

(30) Priority : **04.02.94 US 191949**

(43) Date of publication of application :
**09.08.95 Bulletin 95/32**

(84) Designated Contracting States :
**AT BE DE DK ES FR GB GR IE IT LU NL PT SE**

(71) Applicant : **ADVANCED MICRO DEVICES INC.**
**One AMD Place,**
**P.O. Box 3453**
**Sunnyvale, California 94088-3453 (US)**

(72) Inventor : **Schnizlein, Paul**
**11410 Antler Bend Road**
**Austin, Texas 78737-9465 (US)**
Inventor : **Hendrickson, Alan F.**
**1801 Kenwood**
**Austin, Texas 78704 (US)**

(74) Representative : **BROOKES & MARTIN**
**High Holborn House**
**52/54 High Holborn**
**London, WC1V 6SE (GB)**

(54) **Apparatus and method for sending signalling data in a cordless telephone system.**

(57)    Disclosed is a method of transmitting data. The data includes multiple data packets each comprised of at least one code word. The at least one code word of each of the multiple data packets conforms to a standard protocol. The standard protocol provides for a select bit of each of the at least one code words of each of the multiple data packets indicative of a pending transmission of a select data packet including the at least one code word. The select bit may have a value of 1 or 0. A prepend code word indicates transmission of the select data packet will follow. The method includes detecting the select bit of one of the at least one code words of one of the multiple data packets, determining the value of the select bit, storing a portion of the one of the at least one code words including the select bit if the value of the select bit is 1, transmitting the prepend code word in response to the step of storing, and sending the select data packet.

EP 0 666 675 A2

The subject matter of this application is related to that in the following European applications based on corresponding US applications and being filed concurrently herewith:

| US Serial No. | European Application No. | Our Ref. |
|---|---|---|
| 08/192.007 | | PCCS/TT0410/SMP |
| 08/191.940 | | PCCS/TT0412/SMP |
| 08/191.994 | | PCCS/TT0413/SMP |
| 08/912.046 | | PCCS/TT0414/SMP |
| 08/192.057 | | PCCS/TT0415/SMP |
| 08/192.009 | | PCCS/TT0416/SMP |
| 08/191.948 | | PCCS/TT0417/SMP |
| 08/191.818 | | PCCS/TT0418/SMP |

The subject matter of the application is also related to that in our copending European applications: 93305465.2 (TT0139), 93305458.7 (TT0140), 93305450.4 (TT0141), 93305457.9 (TT0142), 93305466.0 (TT0143), 93305459.5 (TT0144), 93305482.7 (TT0145), 93305454.6 (TT0146), 93305461.1 (TT0147), 93305456.1 (TT0148), 93305449.6 (TT0149) and 93305453.8 (TT0150).

The subject matter of each of the aforesaid concurrently filed and copending applications is hereby incorporated in the present application by this reference thereto.

The invention relates to systems and methods for sending multiplexed signals within limited available data bandwidth and, more particularly, relates to systems and methods for D-channel transmission in a cordless telephone integrated circuit conforming to the CT2 standard (as herein defined).

Cordless telephony is increasing in popularity, both in the United States and other countries. The conventional corded telephone consists of a base unit and a handset unit connected by an electrical cord. Because of the connection of base unit and handset unit in the conventional corded telephone, the user's range of motion is limited to the extent of the electrical cord. Cordless telephones, on the other hand, allow the user greater range of motion while using the telephone. Instead of a physical electrical cord connecting handset and base unit, cordless telephone handset and base units communicate with each other over a communication channel established by the transmission and reception of electromagnetic waves, conventionally radio waves.

Several cordless telephone system standards were previously developed and have been implemented.

Most of the cordless telephone systems today conform to one of those standards. One standard, Cordless Telephony Generation 2 (CT2) interface specification for digital technology, is currently widely followed in the United Kingdom and certain European countries. The CT2 standard has been accepted by the European Telecommunications Standard Institute (ETSI) as an interim European standard. In the U.S., a different standard, the Digital European Cordless Telecommunications (DECT) standard, has been most commonly followed. It appears the CT2 standard will shortly become the European country permanent standard and that such standard will be adopted in other countries, including those of Asia and the Pacific Rim.

According to the CT2 standard, a cordless telephone apparatus conforming to the standard "exchanges data in a time-division duplex mode with an instantaneous data rate of 72 kbit/s. Under various situations, up to three sub-channels have to be multiplexed within the available data bandwidth. These [sub-channels] are

(i) a signaling channel (the D channel);
(ii) a voice/data channel (the B channel);
(iii) a burst synchronization channel (SYN channel) used for bit and burst synchronization."

Interim European Telecommunication Standard 1-ETS 300 131 R1, 5th Draft, European Telecommunications Standard Institute (3 February 1993), p.41. [the "CT2 Specification"].

As provided by the CT2 standard, the D-channel is a separate datastream that is employed for signalling. The CT2 standard provides for two kinds of data packets transmissible in the D-channel. Those two types of data packets are single code word packets and multiple code word packets. Single code word (or "fixed length") packets are comprised of only one word per packet. Multiple code word (or "variable length") packets, on the other hand, comprise an address code word first in the packet followed by a variable number of data code words. Each code word, of both single code word packets and multiple code word packets, is composed of eight octets (i.e., 64 bits).

The CT2 standard further provides protocols for ordering of data packets. In sending a data packet on the D-channel in accordance with the CT2 standard, a character, called a "Sync D," is first sent on the D-channel. This "Sync D" is a 16-bit synchronization word that enables the receiver to prepare to receive a code word, either single or multiple. In other words, the Sync D indicates to the data packet's receiver that it should synchronize on the Sync D word in preparation for receiving a code word as the next data packet. The CT2 standard provides for this Sync D in order that the D-channel may remain idle, i.e., just alternating, until the particular Sync D word is sent. Receipt of a Sync D word is an indication to the recipient that it should begin "listening" because the next word will be a code word.

Further with respect to the CT2 standard protocols, packets are of two types, depending upon whether the packet is a single code word packet or a multiple code word packet. According to the CT2 Specification, a code word indicating that a packet is single code word packet includes a 0 value as bit 2 (the Formal Type bit or "FT"). When sending a multiple code word packet, on the other hand, the CT2 Specification provides that the code word shall include a value 1 as bit 2 (the FT bit). CT2 Specification, p. 57.

Under the CT2 standard protocols, each data packet may occupy one or several code word(s) following the Sync D word. The first code word of a packet is an address code word and any subsequent code words are data code words. Bit 1, octet 1 of the code words are encoded 1 for address code words ("ACW") and 0 for data code words ("DCW"). Two packet formats exist as indicated by the Format Type bit ("FT"), octet 1, bit 2. The FT bit of a code word when set to 0 indicates that the code word is a single code word packet and when set to 1 indicates that the code word is part of a multiple code word packet. Due to these protocols, a receiver of D-channel data packet transmissions can determine the type of code word, either address or data, and the type of data packet, either single code word packet or multiple code word packet.

Means for saving power in cordless telephone devices are advantageous. Typically those devices comprise a base set unit and a handset unit. The base set unit is typically fixed and connected with a continuously available power supply. The handset unit, on the other hand, is typically mobile some distance from the base set unit and can only be supplied with power when it is correctly positioned in contact with the base set unit. When the headset unit is removed from positioning with the base set unit, the handset unit retains a power charge for some period until drained. Once the stored power is used up by the handset unit, the handset unit must be replaced in position in contact with the base set unit for re-charging. As is apparent, limiting power consumption by the handset unit will allow longer periods of operation between charges. In addition to this advantage of limiting power consumption by the handset unit, there are certain advantages in reducing power consumption by the base set unit.

It is known that in connection with sending multiplexed signals within limited available bandwidth (or "channels"), buffering signal paths can increase capacity of the paths for signal transmission. As used herein throughout, the term "signal" shall have a broad meaning, including, but not limited to, any physical representation which conveys data from one point to another and any visual, audible or other indication used to convey information or the intelligence, message or effect to be conveyed over a communication system. A buffer is a device in which data is stored temporarily in the course of transmission from one point to another, used to compensate for a difference in the flow of data, or time of occurrence of events, when transmitting data from one device to another. Where multiple signals are sent via limited available bandwidth, a limited number of signals may be sent via that bandwidth at any instant of time. Multiplexing of signals, for example, via burst signalling, can increase bandwidth signal capacity. Multiplexing is a term that refers to any of several methods of interleaving or simultaneously transmitting two or more messages on a single channel. Multiplexing, however, is still limited, that is, even with multiplexing, only limited numbers of signals may be concurrently set via a single channel of a particular bandwidth. Buffering, in addition to multiplexing, allows the processor at each end of the channel more time for processing the signals sent by the channel.

When a buffer is interconnected with a signal channel, the buffer can serve to store certain signals sent via the channel. When certain signals sent by way of the channel are passed to storage in the buffer, the signals allow the processor at either end of the channel more time in order to process the stored data. Without the buffer, the processor would need to immediately process all data as it is passed from the channel to the processor. By so buffering signals sent in the channel, the processor may more slowly process the signals, allowing for slower processor speed.

Signal channels may even be double-buffered to further allow more time for processing signals sent through a signal channel. In double buffering, several arrangements are possible, however, a typical arrangement includes "cascaded" buffers in which two buffers may hold signals sent via a single channel in a cascading manner, i.e., a first signal is loaded into a first buffer; a second signal then replaces that first signal in the first buffer and the first signal is loaded into a second buffer; a third signal then replaces the second signal in the first buffer and the second signal replaces the first signal in the second buffer to a receiving device; etc. Triple and further multiple buffer arrangements are also possible, as well as other buffer loading/replacement arrangements.

It has been a practice to interconnect a signal channel with one or more buffers in order to allow more time for the processor to process data sent in the channel. It has also been a practice to send multiplexed signals via a single signal channel. Both of these practices have been previously employed in connection with a D-channel of a CT2 standard integrated circuit, and in such a circuit employed in a cordless telephone system.

Though these prior practices of buffering and multiplexing may allow for slower processor speed and increase channel signal capacity, respectively, for example, in a D-channel of a CT2 standard integrated circuit, it has been discovered that the prior technology for employing buffering and multiplexing is not necessarily optimal with respect to power consumption. We shall describe apparatus and a method that reduces power consumption in devices in which more time is allowed for processing by buffering and channel capacity is increased by multiplexing. The apparatus and method achieves such advantageous reductions in power consumption by taking advantage of particular protocols and formats of code words of data packets being sent on a channel.

The apparatus and method, by taking advantage of certain inherencies of data packet protocols and formats, particularly those of the CT2 standard, provide power savings and other advantages in cordless telephony technology and electronics generally. The apparatus and method are thought to be particularly effective when implemented in systems and methods of cordless telephony. In particular, the apparatus and method are particularly desirable in the case of cordless telephone systems comprising a base unit and a handset unit and which conform to the CT2 standard. Though particularly desirable in those applications, it is believed the apparatus and method can further solve many other diverse problems found in telephone and digital communications and device systems generally, regardless of particular standards, if any, which may apply. As will be apparent, the apparatus and method have numerous and varied application and are a significant improvement in the art.

Accordingly, we shall describe an apparatus for transmitting data. The data includes multiple data packets each comprised of at least one code word. The at least one code word of each of the multiple data packets conforms to a standard protocol. The standard protocol provides for a select bit of each of the at least one code words of each of the multiple data packets indicative of a pending transmission of a select data packet including the at least one code word. The select bit may have a value of 1 or 0. A prepend code word indicates transmission of the select data packet will follow. The apparatus comprises a detector for sensing presence of the select bit of one of the at least one code words of one of the multiple data packets, a valuator for determining the value of the select bit, a register for storing a portion of the one of the at least one code words including the select bit if the value of the select bit is 1, a trigger for transmitting the prepend code word in response to storing of the portion, and a transmitter for sending the select data packet.

We shall further describe a method of transmitting data. The data includes multiple data packets each comprised of at least one code word. The at least one code word of each of the multiple data packets conforms to a standard protocol. The standard protocol provides for a select bit of each of the at least one code words of each of the multiple data packets indicative of a pending transmission of a select data packet including the at least one code word. The select bit may have a value of 1 or 0. A prepend code word indicates transmission of the select data packet will follow. The method comprises the steps of detecting the select bit of one of the at least one code words of one of the multiple data packets, determining the value of the select bit, storing a portion of the one of the at least one code words including the select bit if the value of the select bit is 1, transmitting the prepend code word in response to the step of storing, and sending the select data packet.

For a more complete understanding of the present invention and for further objects and advantages thereof, reference may now be had to the following description in conjunction with the accompanying drawings, in which:

FIG. 1 is an illustration of code word format according to the CT2 standard;

FIG. 2 is a simplified, block illustration of operation of a preferred embodiment of the present invention, for example, for use in a transmitter of a cordless telephone;

FIG. 3 is a simplified, block illustration of operation of a preferred embodiment of the present invention, for example, for use in a receiver of a cordless telephone;

FIG. 4 is a detailed schematic of the receive control block of a preferred embodiment of the present invention, and

FIG. 5 is a detailed schematic of the Sync D control register of a preferred embodiment of the present invention.

The following description primarily addresses the preferred embodiment in an application to communications systems conforming to the CT2 standard. Those skilled in the art will, nevertheless, appreciate that alternative applications are possible.

Generally, we describe an embodiment that includes systems and methods for sending multiplexed signals within limited available data bandwidth. The systems and methods of the embodiment are particularly effective for data transmission according to the CT2 standard, that is, according to the protocols and formats provided by the CT2 standard for D-channel data packet transmissions and receptions. Nevertheless, systems and methods of the embodiment and the possible alternative embodiments are not limited to the particular application in connection with that standard. The embodiment, together with the possible alternative embodiments, is thought to have varied and broad application in any case of data transfers involving protocols and formats that control or signal control of the transfers.

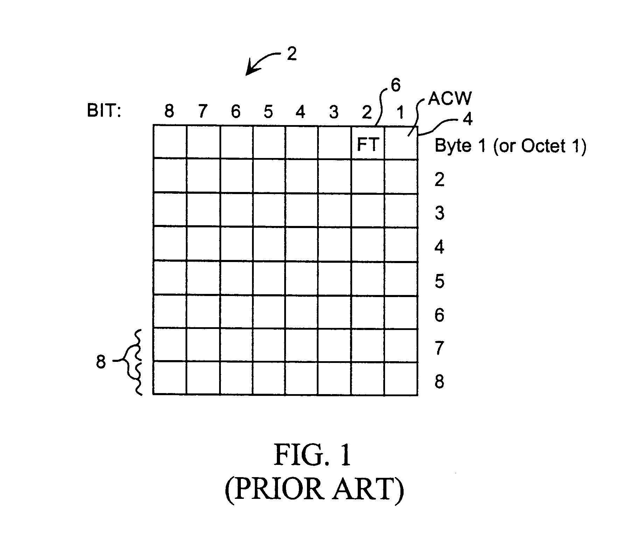

Referring now to FIG. 1, for purposes of illustration and example only, a code word format 2 of a data packet according to the CT2 standard is shown. As previously described regarding the CT2 standard, the code word format 2 for data packets consists of eight bytes (or octets) of eight bits each. For purposes of discussion, the bytes are numbered 1-8 and are rows of eight blocks and the bits are numbered 1-8 and are blocks in the rows. Note that in byte 1, bit 1, referred to herein as an Address Code Word ("ACW") bit 4, a single bit of data is found that is indicative of whether the particular code word in which the ACW bit 4 is contained is or is not an address code word. If the value of the ACW bit 4 is a 1, the code word is an address code word. If, on the other hand, the value of the ACW bit 4 is a 0, the code word is a data code word.

Still referring to FIG. 1, byte 1, bit 2, referred to herein as Format Type ("FT") bit 6, of the code word format 2 of a data packet according to the CT2 standard is identified. This FT bit 6 indicates the format type of the particular data packet of which the code word format 2 is a part. As previously described, if the FT bit 6 has a value of 0, the data packet is a single code word packet. On the other hand, an FT bit 6 value of 1 indicates that the data packet is a multiple code word packet.

Continuing to refer to FIG. 1, recall that, as previously stated, to conform to the CT2 standard, a Sync D character is sent on the D-channel prior to sending a code word in order to alert the receiver that the next transmission is a code word of a data packet. A variety of means may function to perform processing necessary to cause a Sync D to be appropriately sent on the D-channel to a receiver to alert the receiver that a code word follows. For example, within one clock cycle, six bytes (e.g., bytes 1-6) of each code format 2 may be stored an a check of a next check byte 8 (e.g., byte 7) of each code word format 2 may be performed. A value determination may then be performed of a particular bit (not shown) stored in a register (not shown) by means of the check performed on the check byte 8. The check byte 8 may thereafter be discarded. The registered bit then can signal whether or not a Sync D should be inserted before sending a code word. Because in this example all these processing steps are performed within one clock cycle, the processor must operate at a high speed. As is generally known, a processor operated at a high speed consumes more power than a processor operating at a slower speed. The present invention, as hereinafter detailed, causes a Sync D to be appropriately sent on the D-channel to a receiver and, yet, reduces power consumption because processor speed can be slower than in many other configurations.
should not be sent prior to each particular code word.

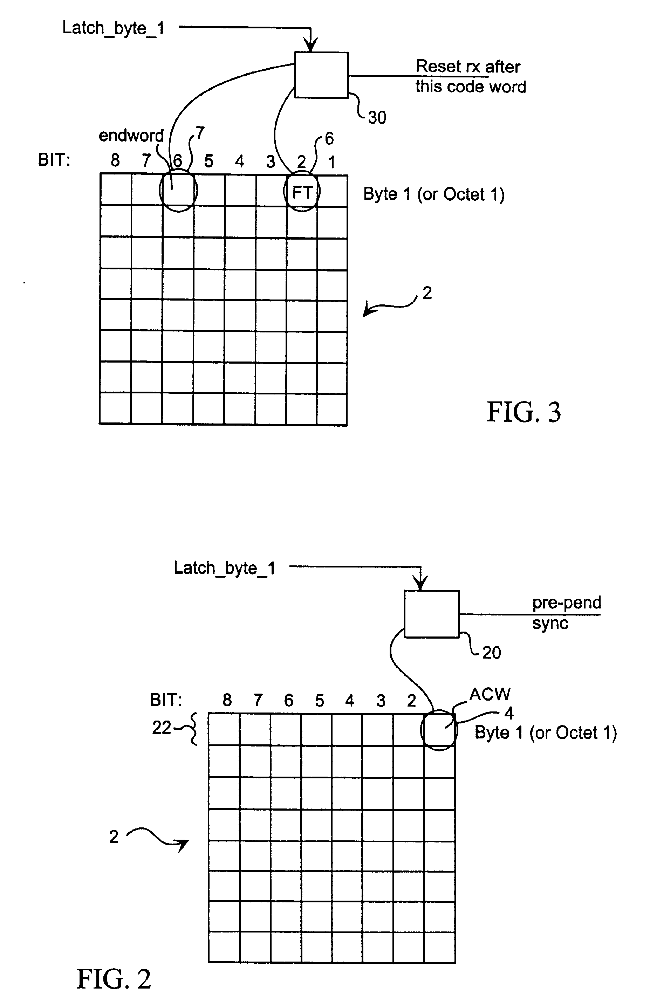

Now referring to FIG. 2, the preferred embodiment of the present invention for a transmitter, which preferred embodiment serves to limit processing speed requirements and thus saves power, is simply illustrated. In this preferred embodiment, a single bit of a data packet is detected. Based on that detection, a register, a Sync D control register 20, provides a determination, based solely on the value of that bit, whether or not a Sync D should be sent prior to the next code word to be sent.

Still referring to FIG. 2, in this preferred embodiment for a transmitter, a detection is made of the ACW bit 4 of each code word format 2 prior to sending. If the ACW bit 4 has a value of 1, a Sync D control register 20 loads byte 1 22. The Sync D control register 20 then triggers a Sync D word as the next transmission. If the ACW bit 4 has a value of 0, however, the Sync D control register 20 loads byte 1 22 (with the value 0) but the Sync D control register 20 does not trigger a Sync D word as the next transmission.

Now referring back to FIG. 1, a variety of means may function to perform processing necessary to cause a receiver to receive a Sync D on the D-channel, to capture a data packet that follows the Sync D, and to reset the receiver after the data package is completely captured. For example, a receiver may start capturing a transmitted data packet immediately after the receiver receives a transmitted Sync D word that precedes the data packet. The transmitted data may be captured by the receiver in its buffers. When the receiver's buffers are full of the captured data, the receiver interrupts the capture process and processing is implemented to remove captured data from the buffers. When the captured data has been removed by this processing, a particular control bit may be written to a register. That control bit, when so written, may serve to instruct the receiver to not process any more data until another Sync D is sent to the receiver. The receiver also performs a reset after the last code word. Because in this example all these processing steps must be performed by the receiver in receiving data on the D-channel, the processor must operate at a high speed. As is known and as was stated above, processing consumes power and the higher the required processing speed, the greater the power consumption. The present invention, as hereinafter detailed, eliminates much of the high speed processing that would be required in the example receiver scenario presented above and in other scenarios, therefore, reducing power consumption in receiver operation.

Now referring to FIG. 3, the preferred embodiment for a receiver, which preferred embodiment can serve to reduce processing speed and thus save power, is shown. In the preferred embodiment, much of the high speed processing requirements are eliminated. This is possible in the preferred embodiment because a detection of two bits of each code word of every data packet is performed. With those two bits, then, the preferred embodiment, due to particular circuitry comprising a receive control block 30, makes a determination based solely on the respective values of those bits, whether or not the receiver should stop capturing data and reset.

Still referring to FIG. 3, in this preferred embodiment for a receiver, a detection is made of the FT bit 6 and an endword bit 7 of each code word format 2 sent to the receiver. If either (a) the FT bit 6 has a value of 0 (indicative that the data packet is a single code word) or (b) the FT bit 6 has a value of 1 (indicative that the data packet is a multiple code word) and the endword bit 7 of the code word format 2 has a value indicative that the code word is the last of the data packet (either 0 or 1 according to design), then the receive control block 30 triggers a reset operation at the receiver. If, on the other hand, the endword bit 7 of the code word format 2 has a value indicative that the code word is not the last of the data packet (the other of 0 or 1 according to design) and the data packet is a multiple code word packet, then the receive control block 30 does not trigger a reset operation at the receiver and the receiver continues capturing data.

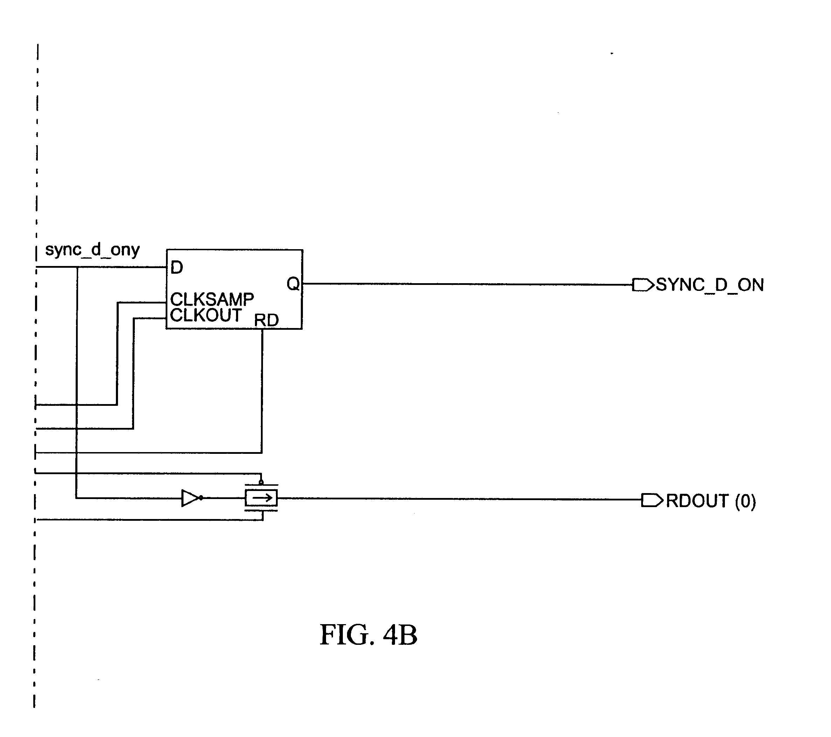

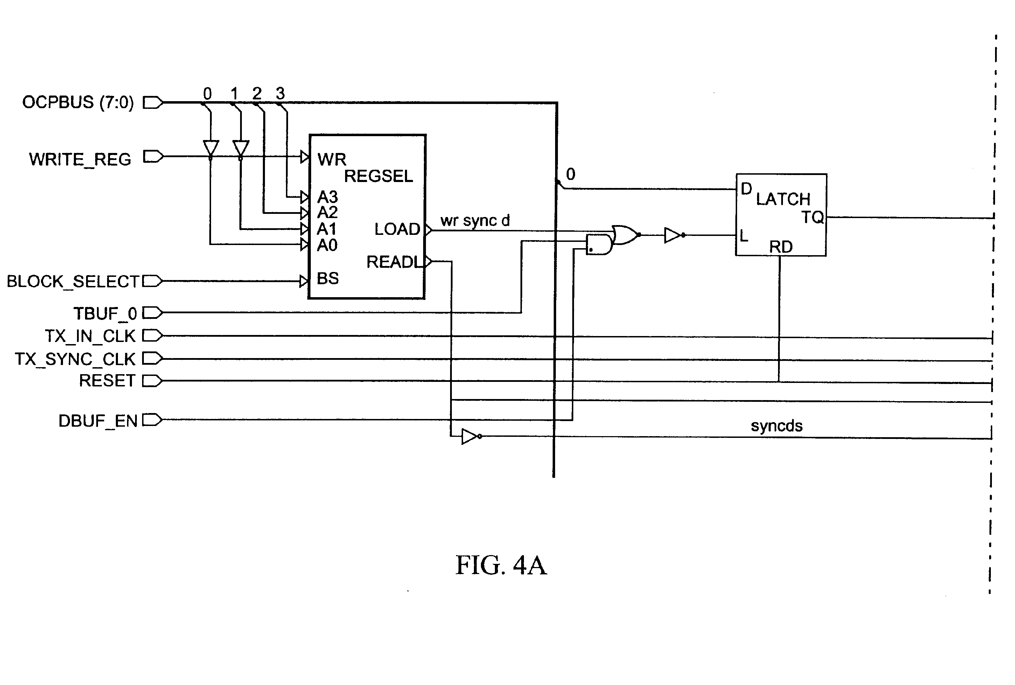

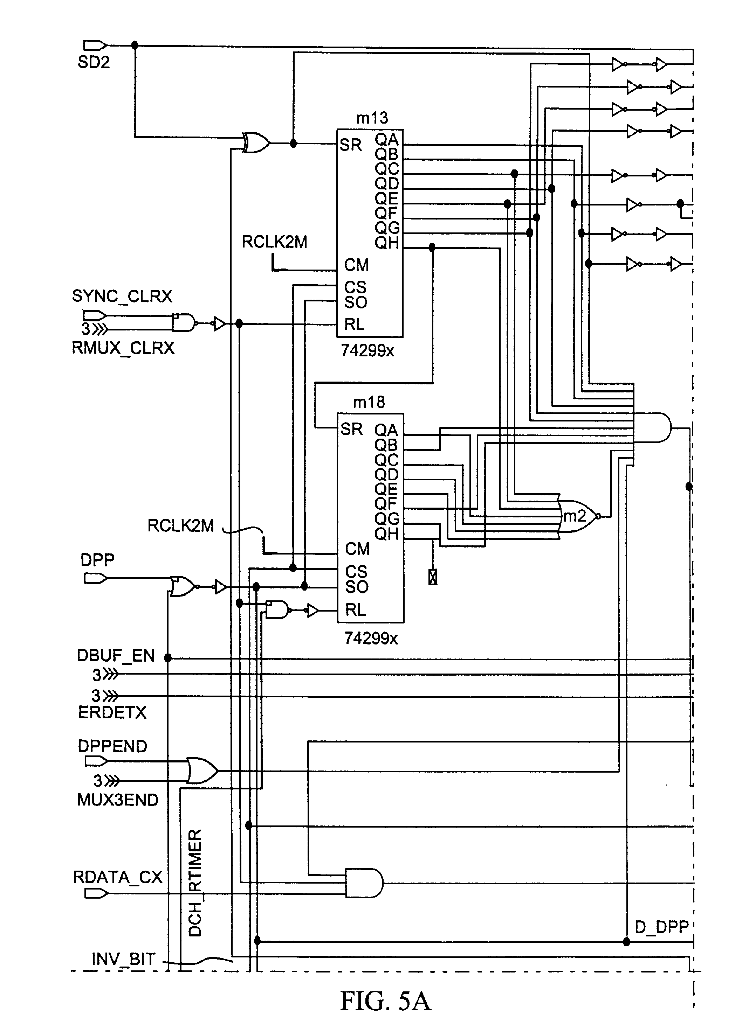

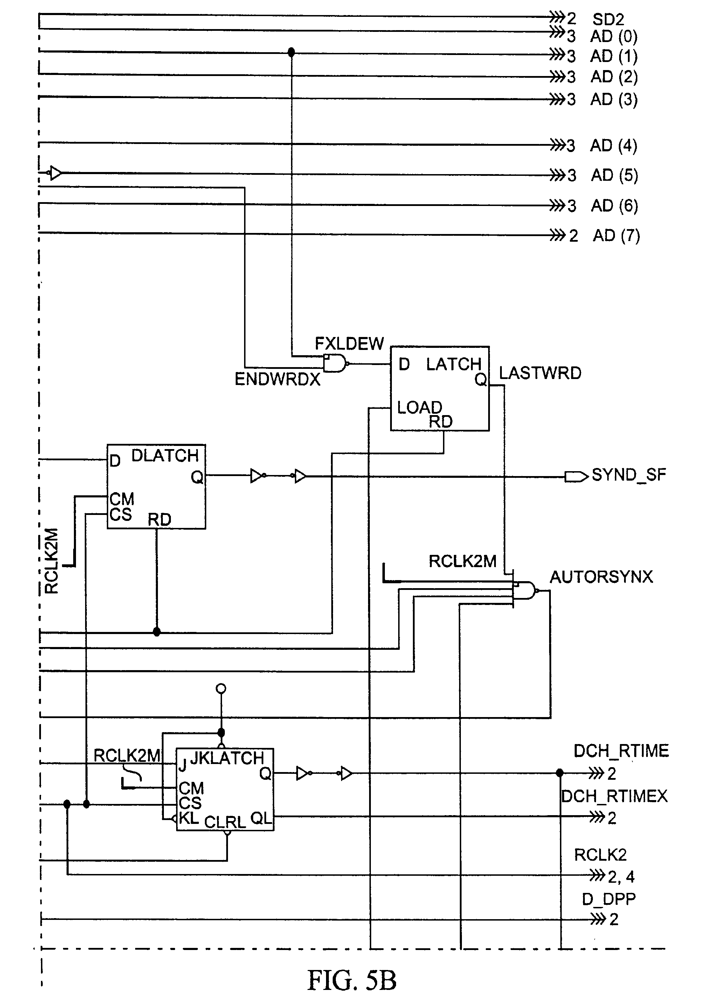

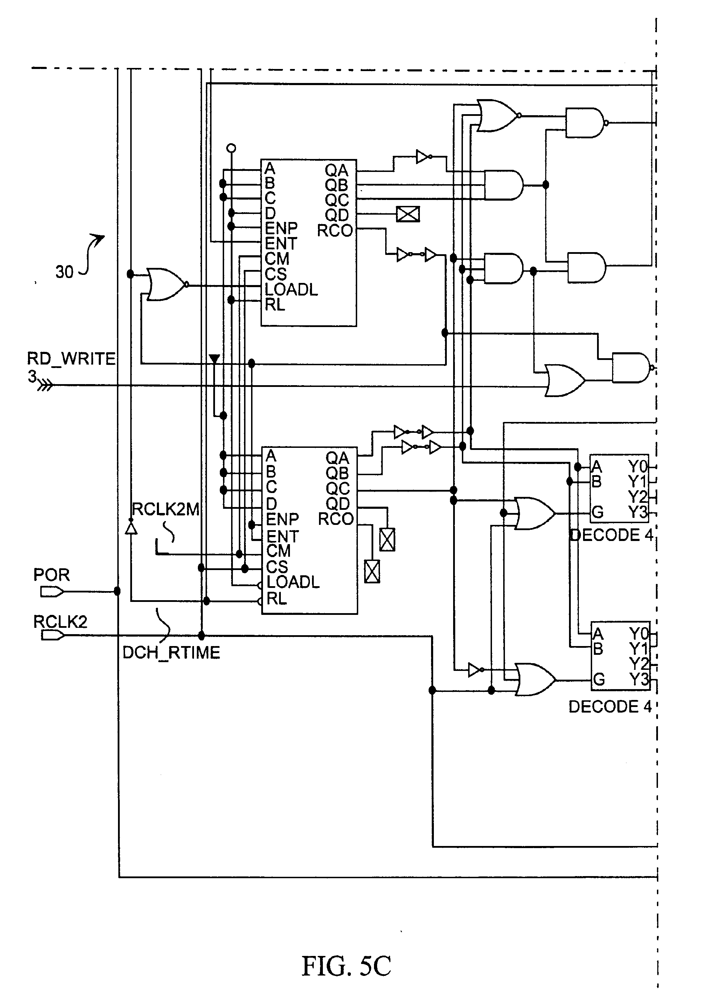

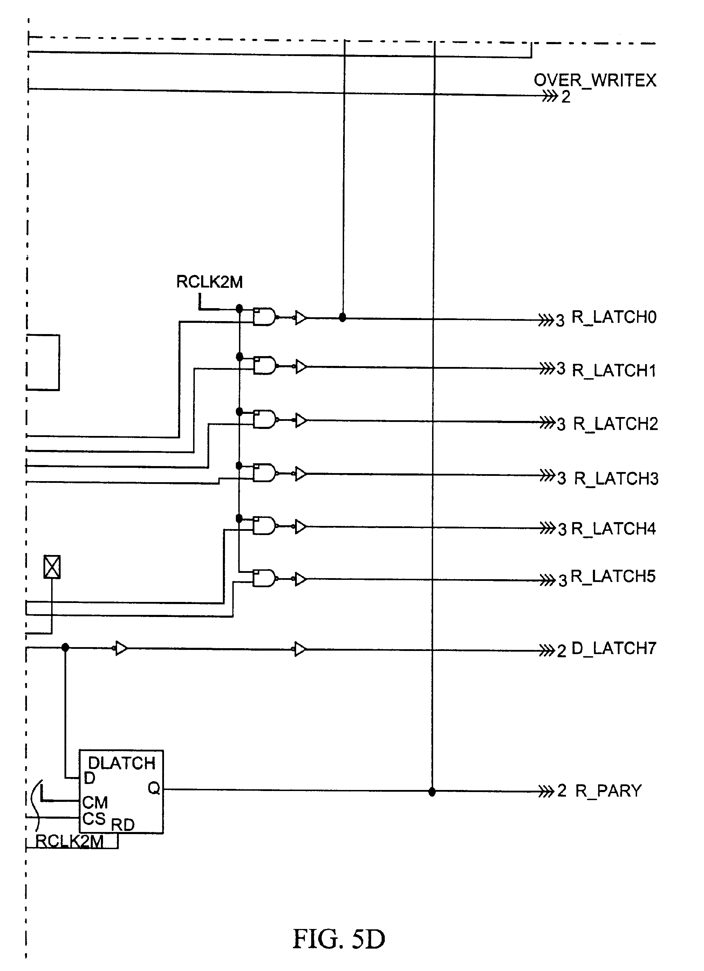

Now referring to FIGS. 4 and 5, detailed schematics of the preferred embodiment of the Sync D control register 20 and the receive control block 30, respectively, are given. Those skilled in the art will understand and appreciate what is illustrated by these schematics. Although these schematics show the preferred embodiment, alternative embodiments in accordance with the principles of the invention are possible, as those skilled in the art will appreciate.

One possible application of the present embodiment is, as has been stated, an integrated circuit for a cordless telephone handset and base unit, for example, such as the integrated circuit disclosed in our aforesaid co-pending applications 93305465.2, 03305458.7, 93305450.4, 93305457.9, 93305466.0, 93305459.5, 93305482.7, 93305454.6, 93305461.1, 93305456.1, 93305449.6 and 93305453.8.

The invention has other application, however, and the preferred embodiment and all other embodiments are not limited to use in an integrated circuit for a cordless telephone base set unit and handset unit conforming to the CT2 standard. The invention and its embodiments will have application in any instance of data transmission according to particular protocols and formats, wherein those protocols and formats provide data indicative of operations to be performed between data packets, or certain ones thereof, transmitted.

As is clearly seen, the present invention is a significant improvement in the art. The present invention is believed to be especially effective when configured and employed as described herein, however, those skilled in the art will readily recognize that numerous variations and substitutions may be made in the invention and its use and configuration to achieve substantially the same results as achieved by the embodiments and, in particular, the preferred embodiment expressly described herein. Each of those variations is intended to be included in the description herein and forms a part of the present invention. The foregoing detailed description is, thus, to be clearly understood as being given by way of illustration and example only, the spirit and scope of the present invention being limited solely by the appended claims.

**Claims**

1.  An apparatus for transmitting data, said data includes multiple data packets each comprised of at least one code word, said at least one code word of each of said multiple data packets conforms to a standard protocol, said standard protocol provides for a select bit of each of said at least one code words of each of said multiple data packets indicative of a pending transmission of a select data packet including said at least one code word, said select bit having a value of 1 or 0, wherein a prepend code word indicates transmission of said select data packet will follow, comprising:
    a detector for sensing presence of said select bit of one of said at least one code words of one of said multiple data packets;
    a valuator for determining said value of said select bit;
    a register for storing a portion of said one of said at least one code words including said select bit if said value of said select bit is 1;
    a trigger for transmitting said prepend code word in response to storing of said portion; and
    a transmitter for sending said select data packet.

2.  A method of transmitting data, said data includes multiple data packets each comprised of at least one code word, said at least one code word of each of said multiple data packets conforms to a standard protocol, said standard protocol provides for a select bit of each of said at least one code words of each of said multiple data packets indicative of a pending transmission of a select data packet including said at least one code word, said select bit having a value of 1 or 0, wherein a prepend code word indicates transmission of said select data packet will follow, comprising the steps of:
    detecting said select bit of one of said at least one code words of one of said multiple data packets;
    determining said value of said select bit;
    storing a portion of said one of said at least one code words including said select bit if said value of said select bit is 1;
    transmitting said prepend code word in response to said step of storing; and
    sending said select data packet.

FIG. 1
(PRIOR ART)

Latch_byte_1

Reset rx after
this code word

30

endword

7

BIT:  8  7  6  5  4  3  2  1

FT

6

Byte 1 (or Octet 1)

2

## FIG. 3

Latch_byte_1

pre-pend
sync

20

ACW

BIT:  8  7  6  5  4  3  2  1

4

22

Byte 1 (or Octet 1)

2

## FIG. 2

FIG. 4B

FIG. 4A

FIG. 5A

FIG. 5B

FIG. 5C

14

FIG. 5D